Europäisches Patentamt

(19) European Patent Office

Office européen des brevets

(11) Publication number: **0 029 595**
**A1**

## (12) EUROPEAN PATENT APPLICATION

(21) Application number: 80107269.5

(22) Date of filing: 21.11.80

(51) Int. Cl.³: **C 09 D 3/81**
C 09 D 3/80, C 08 L 33/06
C 08 L 33/14

(30) Priority: 21.11.79 US 96282
05.05.80 US 146263

(43) Date of publication of application:
03.06.81 Bulletin 81/22

(84) Designated Contracting States:
BE CH DE FR GB IT LI NL SE

(71) Applicant: E.I. DU PONT DE NEMOURS AND COMPANY
Legal Department 1007 Market Street
Wilmington, Delaware 19898(US)

(72) Inventor: Chang, David Chi-Kung
945 Stephenson Highway
Troy Michigan 48084(US)

(74) Representative: Abitz, Walter, Dr.-Ing. et al,
Abitz, Morf, Gritschneder P.O. Box 86 01 09
D-8000 München 86(DE)

(54) An improved high solids coating composition of a low molecular weight glycidyl acrylic polymer and an alkylated melamine cross-linking agent, and a substrate coated therewith.

(57) The improved high solids coating composition contains at least 50% by weight of a binder of film-forming constituents in which the constituents are of

(A) an acrylic polymer that has a number average molecular weight of about 500-10,000, and is of
glycidyl methacrylate,
an alkyl methacrylate, and optionally
an alkyl acrylate,
a hydroxyalkyl methacrylate,
a hydroxyalkyl acrylate or
styrene;
(B) an alkylated melamine formaldehyde cross-linking agent;

the improvement used with this composition is the addition of select ultraviolet light stabilizers and optionally, antioxidants. The composition is particularly useful for clear coat/color coat exterior finishes for automobiles, trucks and airplanes.

FF-7628-A     TITLE

An Improved High Solids Coating Composition
Of A Low Molecular Weight Glycidyl  Acrylic Polymer
And An Alkylated Melamine Cross-Linking Agent,
And A Substrate Coated Therewith.

BACKGROUND OF THE INVENTION

This invention is related to high solids coating compositions, in particular, to an improved high solids glycidyl acrylic coating compositions.

Glydicyl acrylic coating compositions are well known in the art as shown by Fang U.S. Patent 2,857,354, issued October 21, 1958 and Fang U.S. Patent 2,866,767 issued December 30, 1958. These patents illustrate coating compositions of excellent quality.  However, these compositions have a relatively high solvent content to provide for good application properties and good properties of the resulting dried finish.  To utilize these compositions in areas which have strict air pollution regulations, pollution abatement equipment is required.  This equipment is expensive and increases capital investment of a plant and is costly to operate.  Any attempt to reduce the solvent content of these compositions generally results in finishes which have either a poor appearance or unacceptable properties or both.

Also, it has been found that these glycidyl acrylic coating compositions provide an excellent appearance along with depth of color and metallic glamour when a clear or transparent coat of the compositions is applied over a conventional colored or pigmented coat.  However, the weatherability and durability of these clear coats have been found to be poor since checking, cracking and flaking of the clear coat occur  after relatively short periods of exposure to outdoor weathering, giving the automobile or truck an unsightly appearance. Refinishing of these weathered clear coats is difficult and expensive since the clear coat must be sanded to remove cracked and flaked clear coat before a refinish coat can be applied.

There is great need for a glycidyl acrylic coating composition that has a low solvent content and that can be utilized without pollution abatement equipment but still provides a high quality finish that is resistant to outdoor weathering which is useful as an exterior finish for automobiles, trucks, and airplanes and as a clear coat/color coat finish. The high solids coating composition of this invention has these desirable characteristics.

## SUMMARY OF THE INVENTION

The improved high solids coating composition comprises at least 50% by weight of a binder of film-forming constituents and up to 50% by weight of a nonaqueous liquid carrier; in which the film-forming constituents consist essentially of

(A)   about 50-95% by weight of a glycidyl acrylic polymer having a number average molecular weight determined by gel permeation chromotography of about 500-10,000 and preferably 500-4,500, and contains about 2-10% by weight of a chain transfer agent, and the acrylic polymer consists essentially of

glycidyl methacrylate,

an alkyl methacrylate that has 1-18 carbon atoms in the alkyl group, and optionally,  an alkyl acrylate, a hydroxyalkyl  methacrylate, a hydroxyalkyl  methacrylate or styrene and

(B)   5-50% by weight of alkylated melamine formaldehyde cross-linking agent having 1-4 carbon atoms in the alkyl group;

the improvement used therewith comprises the inclusion of about 0.1-20% by weight, based on the weight of the binder of the coating composition, of an ultraviolet light stabilizer; optionally, the coating composition contains about 1-20% by weight, based on the weight of the binder, of an ultraviolet light stabilizer and about 0.1-5% by weight, based on the weight of the binder, of an antioxidant.

DESCRIPTION OF THE INVENTION

The high solids coating composition has a binder content of film-forming constituents of at least 50% by weight.  Generally, the composition has a binder content of about 60-85%.  The remainder of the constituents in the composition is a liquid carrier which generally is a solvent for the binder. In addition, the composition optionally contains about 0.1-30% by weight, based on the weight of the binder, of pigment.

The improvement used with the high solids coating composition is the addition to the coating composition of about 0.1-20% by weight, based on the weight of the binder, of an ultraviolet light stabilizer.  Optionally, the composition can contain about 1-20% by weight, based on the weight of the binder, of an ultraviolet light stabilizer and about 0.1-5% by weight, based on the weight of the binder, of an antioxidant, preferably the weight ratio of ultraviolet light stabilizer to an antioxidant is about 1:1 to about 50:1.

4

The binder of film-forming constituents used in the coating composition comprise about 50-95% by weight of a glycidyl acrylic polymer and 5-50% by weight of an alkylated melamine formaldehyde cross-linking agent. For most uses, the composition contains about 65-75% by weight of the glycidyl acrylic polymer and 25-35% by weight of an alkylated melamine formaldehyde cross-linking agent.

The glycidyl acrylic polymer utilized in the coating composition is prepared by solution polymerization in which the monomers are blended with a solvent, polymerization catalyst and chain transfer agent and heated to about 75-150°C for 2-6 hours to form a polymer that has a number average molecular weight of about 500-10,000 and preferably about 500-4,500, and preferably a glass transition temperature of about -20°C to +20°C. Generally, acrylic polymers having a number average molecular weight of about 1,000-3,500 are preferred and used in the composition.

Both the above number average molecular weight and the weight average molecular weight (mentioned hereinafter) are determined by gel permeation chromatography.

The glass transition temperature of the polymer is determined by differential scanning colorimetry or is calculated.

One technique that is successfully used in preparing the low molecular weight glycidyl acrylic polymers is a programmed addition of monomers, solvents, catalyst solution, and chain transfer agent into a polymerization vessel at a given rate. These programmed additions can be manually calculated or calculated by a computer. This allows for the polymerization of low molecular weight glycidyl acrylic polymers which are then terminated with the chain transfer agent at the desired low molecular weight.

Typical solvents which are used to prepare the glycidyl acrylic polymer are the following: toluene, ethyl acetate, acetone, methyl isobutyl ketone, methyl ethyl ketone, ethyl alcohol, and other aliphatic, cycloaliphatic and aromatic hydrocarbon, esters, ethers, ketones and alcohols which are conventionally used.

About 0.1-4% by weight, based on the weight of the monomers, of the polymerization catalyst is used to prepare the acrylic polymer. Typical catalysts are: azobisisobutyronitrile, azobis-$\beta,\gamma$-dimethylvaleronitrile, benzoyl peroxide, t-butyl pivalate and the like.

Typical chain transfer agents are 2-mercaptoethanol, dodecyl mercaptan, benzene thioethanol, mercaptosuccinic acid, butyl mercaptan, mercaptopropionic acid and the like. A sufficient amount of a transfer agent is used to provide the resulting acrylic polymer with about 2-10% by weight of a chain-transfer agent.

The glycidyl acrylic polymer used in the high solids coating composition is of glycidyl methacrylate and an alkyl methacrylate that has 1-18 carbon atoms in the alkyl group, and optionally an alkyl acrylate that has 2-18 carbon atoms in the alkyl group, a hydroxy alkyl acrylate or a hydroxy alkyl methacrylate each having 2-4 carbon atoms in the alkyl group or styrene. The polymer also can contain small amounts of $\alpha,\beta$-ethylenically unsaturated carboxylic acid, such as acrylic acid, methacrylic acid, itaconic acid, in amounts of about 0.1-5% by weight.

Typical alkyl methacrylates and acrylates that can be used to prepare the glycidyl acrylic polymer are: methyl methacrylate, ethyl methacrylate, butyl methacrylate, hexyl methacrylate, 2-ethylhexyl methacrylate, nonyl methacrylate, lauryl methacrylate, stearyl methacrylate, cyclohexyl methacrylate, isodecyl methacrylate, propyl methacrylate, phenyl methacrylate, isobornyl methacrylate, ethyl acrylate, propyl acrylate, isopropyl acrylate, butyl acrylate, isobutyl acrylate, hexyl acrylate, 2-ethylhexyl acrylate, nonyl acrylate, lauryl acrylate, stearyl acrylate, cyclohexyl acrylate, isodecyl acrylate, propyl acrylate, phenyl acrylate, isobornyl acrylate and the like.

Adhesion-promoting monomers can also be used in the glycidyl acrylic polymer such as diethyl aminoethyl methacrylate, t-butylaminoethyl methacry-late, 3-(2-methacryloxyethyl)-2,2-spirocyclohexyl oxazolidene and the like.

Typical hydroxyalkyl acrylates and meth-acrylates which can be used to prepare the glycidyl acrylic polymers are: 2-hydroxybutyl acrylate, 2-hydroxyethyl methacrylate, 2-hydroxypropyl methacrylate, 2-hydroxybutyl methacrylate, and the like.

The glycidyl acrylic polymer can contain about 0.1-30% by weight of other constituents such as styrene or substituted styrene, such as methyl styrene, acrylonitrile, methacrylonitrile, acrylamide and methacrylamide.

One useful glycidyl acrlic polymer is of 15-50% by weight glycidyl methacrylate, 10-60% by weight of methyl methacrylate and 15-40% by weight of an alky methacrylate or an alkyl acrylate having 2-12 carbon atoms in the alkyl group. The following are typical examples of such useful polymers:

| methyl methacrylate | lauryl methacrylate | glycidyl methacrylate | weight ratio | |
|---|---|---|---|---|
| " | " | " | " | 45/18/37 |
| " | " | " | " | 54/21/25 |
| " | " | " | " | 36/15/48 |
| " | " | " | " | 27/26/37 |
| " | " | " | " | 45/18/37 |
| " | " | " | " | 59/23/18 |
| " | butyl acrylate | " | " | 42/21/37 |
| " | butyl methacrylate | " | " | 45/18/37 |

Other useful polymers contain about 20-30% by weight styrene, 10-30% by weight methyl methacrylate, 15-30% by weight lauryl methacrylate, and 25-45% weight glycidyl methacrylate. One preferred acrylic polymer of the above type contains 25% styrene, 20% methyl methacrylate, 18% lauryl methacrylate, 37% glycidyl methacrylate.

Optionally, in addititon to the above film-forming constituents, about 1-10% by weight, based on the weight of the film-forming constituents of the composition of cellulose acetate butyrate can be used in the composition. Cellulose acetate butyrate that has a butyryl content of about 25-60% by weight and a viscosity of about 0.01-2 seconds measured according to ASTM-D-1343-56 at 25°C. can be utilized.

Also, in addition to the above film-forming constituents, plasticizers in the amounts of 0.1-10% by weight, based on the weight of the film-forming constituents, can be used in the composition. Plasticizers that can be used are, for example, butylbenzyl phthalate, dibutyl phthalate, triphenyl phosphate, 2-ethylhexylbenzyl phthalate, dicyclohexyl phthalate, diallyl phthalate, dibenzyl phthalate, butylcyclohexyl phthalate, mixed benzoic acid and fatty oil acid esters of pentaerythritol, poly(propylene adipate)dibenzoate, diethylene glycol dibenzoate, tetrabutylthiodisuccinate, butylphthalylbutyl glycolate, acetyltributyl citrate, dibenzyl sebacate, tricresyl phosphate, toluene ethyl sulfonamide, and dimethylene-cyclohexyl phthalate.

The composition can contain in addition from about 0.5-15% by weight, based on the weight of the composition, of a polyhydroxy functional compound which is a solvent for the film-forming constituents and reduces the application viscosity of the composition and will be cross-linked into a resulting finish prepared from the composition. Typical polyhydroxy functional compounds that are useful are trimethylol ethane, trimethylol proprane, trimethylol butane, trimethyl pentanediol, pentaerythritol, pentanediol, diethylene glycol, dipropylene glycol, triethylene glycol, 2-ethyl-1,3-hexanediol. tripropylene glycol, butanediol and the like. Low molecular weight hydroxyl-terminated polyesters can be used such as a polyester of trimethyl pentanediol and isophthalic acid, a polyester of trimethyl pentanediol and a mixture of dimethyl aliphatic carboxylates.

The alkylated melamine formaldehyde resin used in the composition generally has 1-4 carbon atoms in the alkyl group. The resin is prepared by conventional techniques in which an alcohol such as methanol, ethanol, propanol, isopropanol, butanol, isobutanol, t-butanol and the like is reacted with a melamine formaldehyde resin. The resin can be monomeric or polymeric. One preferred resin which gives a high quality finish is hexamethoxymethyl melamine. Another useful resin is a methoxy/butylmethyl melamine.

Other cross-linking agents can be used in combination with the alkylated melamine formaldehyde resin such as the reaction product of a monoester of neopentylglycol and hydroxy pivalic acid and trimellitic anhydride in a 1:2 molar ratio.

As mentioned before, the composition can contain pigments. These pigments can be introduced into the composition by first forming a mill base with the acrylic polymer utilized in the composition of with other compatible polymers by conventional techniques, such as sand-grinding, ball milling, attritor grinding, two roll milling to disperse the pigments. The mill base is blended with the film-forming constituents as shown in the following Example.

Any of the conventional pigments used in the coating compositions can be utilized in this composition. Examples of typical pigments that can be used are as follows: metallic oxide (such as titanium dioxide), zinc oxide, iron oxide and the like, metal hydroxide, metal flakes (such as aluminum flake), chromates (such as lead chromate), sulfides, sulfates, carbonates, carbon black, silica, talc, china · clay, phthalocyanine blues and greens, organo reda, organo maroons and other organic dyes.

Typical ultraviolet light stabilizers that are useful in the coating compositions are as follows:

Benzophenones such as hydroxydodecycloxy-benzophenone, 2,4-dihydroxybenzophenone, hydroxybenzophenones containing sulfonic acid groups, 2,4-dihydroxy-3',5'-di-t-butylbenzophenone, 2,2',4'-trihydroxybenzophenone esters of dicarboxylic acids, 2-hydroxy-4-acryloxyethoxybenzophenone, aliphatic monoesters of 2,2',4-trihydroxy-4'-alkoxybenzophenone, 2-hydroxy-4-methoxy-2'-carboxybenzophenone;

Triazoles such as 2-phenyl-4-(2'-4'-dihydroxybenzoyl)triazoles, substituted benzotriazoles such as hydroxyphenyltriazoles such as 2-(2'-hydroxy-5'-methylphenyl)benzotriazole, 2-(2'-hydroxyphenyl)benzotriazole, 2-(2'-hydroxy-5'-octylphenyl)naphthotriazole;

Triazines such as 3,5-dialkyl-4-hydroxyphenyl derivatives of triazine, sulfur-containing derivatives of dialkyl-4-hydroxyphenyltriazines, hydroxyphenyl-1,3,5-triazines and such triazines containing sulfonic acid groups, aryl-1,3,5-triazines, orthohydroxyaryl-s-triazine;

Benzoates such as dibenzoate of diphenylolpropane, t-butyl benzoate of diphenylolpropane, nonyl phenyl benzoate, octyl phenyl benzoate, resorcinol dibenzoate.

Other ultraviolet light stabilizers that can be used include lower alkyl thiomethylene-containing phenols, substituted benzenes such as 1,3-bis(2'-hydroxybenzoyl)benzene, metal derivatives of 3,5,-di-t-butyl-4-hydroxyphenylpropionic acid, asymmetrical oxalic acid diarylamides, alkylhydroxyphenylthioalkanoic acid esters, dialkylhydroxyphenylalkanoic acid esters of di- and tri- pentaerythritol, phenyl- and naphthlene-substituted oxalic acid diamides, methyl-$\beta$-(3,5-di-t-butyl-4-hydroxyphenyl)propionate, $\beta,\beta$'-bis(2-hydroxyphenyl)diisopropylbenzene, 3,5'-dibromo-2'-hydroxyacetophenone, ester derivatives of 4,4-bis(4'-hydroxyphenyl)pentanoic acid wherein there is at least one unsubstituted position ortho to the aromatic hydroxyl groups, organophosphorus sulfides such as bis(diphenyl-phosphinothioyl)monosulfide and bis(diphenylphosphino-thioyl)disulfide, 4-benzoyl-6-(dialkylhydroxybenzyl)resorcinol, bis(3-hydroxy-4-benzoylphenoxy)diphenylsilane, bis(3-hydroxy-4-benzoylphenoxy)dialkylsilane,

1,8-naphthalimides, $\delta$-cyano-$\beta$,$\beta$-diphenylacrylic acid derivatives, bis(2-benzoxazolyl)alkanes, bis(2-napthoxazolyl)alkanes, methylene malonitriles containing aryl and heterocyclic substitutes, alkylenebis(dithio)carbamate, 4-benzoyl-3-hydroxyphenoxyethyl acrylate, 4-benzoyl-3-hydroxyphenoxyethyl methacrylate, aryl- or alkyl-substituted acrylonitriles, 3-methyl-5-isopropylphenyl-6-hydroxycoumarone.

Particularly useful ultraviolet light stabilizers that can be used are hindered amines of bipiperidyl derivatives such as those disclosed in Murayama et al., U.S. Patent 4,061,616, issued December 6, 1977, column 2, line 65, through column 4, line 2, and nickel compounds such as /1-phenyl-3-methyl-4-decanoylpyrazolate (5)7-Ni, bis/phenyldithiocarbamato7÷Ni(II), and others listed in the above patent, column 8, line 44 through line 55.

Typical antioxidants are as follows: tetrakis-alkylene dialkylhydroxyaryl alkyl ester alkanes such as tetrakismethylene-3-(3',5'-dibutyl-4'-hydroxyphenyl) propionate methane, the reaction product of p-aminodiphenylamine and glycidyl methacrylate, the reaction product of n-hexyl-N'-phenyl-p-phenylene diamine and glycidyl methacrylate, pentaerythritol tetrakis(thioglycolate), trimethylolpropane tris(thioglycolate), trimethylolethane tris(thioglycolate), N-(4-anilinophenyl)acrylamide, N-(4-anilinophenol)maleamic acid, N-(4-anilinophenyl)maleimide, alkylhydroxyphenyl groups bonded through carboalkoxy linkages to the nitrogen atom of a heterocyclic nucleus containing an imidocarbonyl group or an imidodithiocarbonyl group, 3,5-di-t-butyl-4-hydroxycinnamonitrile, ethyl-3,5-di-t-hexyl-4-hydroxy-cinnamate, substituted benzyl esters of $\beta$-substituted hydroxyphenylpropionic acids, bis(hydroxyphenylalkylene) alkyl isocyanurate compounds, tetrakishydroxybenzylphos- phonium halides alone or in combination with a dialkyl-thiodialkanoate, thiodimethylidyne tetrakisphenols alone or in combination with a dialkyl thiodialkanoate or phosphite or phosphonate, dihydrocarbylhydroxyphenylaryl or -alkyl phosphonites or phosphonates or phosphates or phosphites or phosphinates or phosphinites or phosphoro-thionates or phosphinothionates, diphenylbis(3,5-di-_t_-butyl-4-hydroxyphenoxy)silane, hydrocarbylhydroxy-phenyldihydrocarbyldithiocarbamates such as 3,5-di-_t_-butyl-4-hydroxyphenyldimethyldithiocarbamate and amino-benzylthioether.

One preferred combination of ultraviolet light stabilizer and antioxidant is 2-hydroxy-4-dodecyloxy-benzophenone or a substituted 2(2'-hydroxyphenyl)benzotriazole and tetrakismethylene-3(3',5'-dibutyl-4'-hydroxyphenyl)propionate methane.

An acid catalyst solution can be added to the composition to increase the rate of cross-linking of the composition on curing. Generally, about 0.1-2% by weight, based on the weight of the film-forming constituents, of acid catalyst is used. For example, phosphoric acid or an alkyl acid phosphate in which the alkyl groups has 1-12 carbon atoms can be utilized for this purpose. Typical alkyl acid phosphates are methyl acid phosphate, ethyl acid phosphate, propyl acid phosphate, lauryl acid phosphate, and the like. Sulfonic acid or a substituted sulfonic acid can be used such as para-toluene sulfonic acid.

Adducts of the aforementioned acids also can be used as catalysts. For example, epoxy resins reacted with phosphoric acid or an alkyl acid phosphate or with a substituted sulfonic acid such as paratoluene sulfonic acid are useful. Typical epoxy resins that can be used to form these adducts are "Epon" 828, 1001, 1002, 1003, 1004 which are the condensation products of epichlorohydrin and bisphenol A. Other compounds can be used to form adducts of these acids such as alkyl oxazolidine e.g. dimethyl oxazolidine.

The coating composition of this invention can be applied over a variety of substrates, such as metal, wood, glass, plastics, and the like, by any of the conventional application methods, such as spraying electrostatic spraying, dipping, brushing, flow-coating and the like. The viscosity of the composition can be adjusted for any of these methods by adding solvents if necessary. Generally, the composition is utilized at a high solids content which keeps air pollution at a minimum level.

The coatings are baked at temperatures of about 125-200°C. for about 15 minutes - 2 hours. The resulting coating is about 0.1-5 mils thick but for most uses, a 1-3 mil thick coating is used. One technique that is used to insure that there will be no popping or cratering of the coating is to allow the solvents to flash off for about 15-30 seconds before a second coating is sprayed on or otherwise applied, then waiting from about 2-10 minutes before baking the coating toa llow any residual solvents to flash off. The resulting coatings has good gloss and can be rubbed or polished with conventioanl techniques to improve the smoothness or appearance or gloss or both. The coating has good adhesion to substrates of all types, is hard and resistant to weathering, solvents, alkali, scratches and the like. These characteristics make the composition particularly useful as a finish for automobiles, trucks, airplanes, railroad equipment and for the repair of trucks and automobiles. The composition can also be used on applicances, vending machinges, outdoor equipment such as bridges, water tanks, gas tanks and the like. The coating composition can be used as clear coat/color coat finish for substrates in which the color coat contains an ultraviolet light stabilizer. It is believed that ultraviolet light stabilizer migrates from the color coat into the clear coat and provides ultraviolet light stabilizer to the clear coat for protection against weathering. Preferably, both the clear coat and the color coat contain ultraviolet light stabilizer and as stabilizer is lost from the clear coat due to weathering, it is replenished from the color coat. The color coat provides a reservoir for the ultraviolet light stabilizer for the clear coat and maintains the stabilizer and antioxidant at an effective level that provides protection from weathering. Applicant does not wish to be held to the above theory.

As pointed out above, the color coat can contain an antioxidant which also migrates to the clear coat. The antioxidant can also be used in the clear coat.

Preferred, to form a durable finish, about 5-8% by weight of the ultraviolet light stabilizer is used along with about 0.1-1% by weight of the antioxidant and the ratio of ultraviolet light stabilizer to antioxidant is about 10:1.

In a color coat/clear coat finish, the thickness of the fully cured color coat and clear coat can vary. Generally, the color coat is about 0.4-1.5 mils thick and preferably 0.6-1.0 mils thick and the clear coat is about 0.5-6.0 mils thick and preferably 0.8-1.5 mils thick.

The color coat contains pigment in a pigment-to-binder weight ratio of about 1/100 to about 150/100. Any of the conventional pigments used in coating compositions, including metallic flake pigments, can be used.

The clear coat can also contain transparent pigments, i.e., pigments having the same or similar refractive index as the binder of the clear coat and are of a small particle size of about 0.015-50 microns. Typical pigments that can be used in a pigment-to-binder weight ratio of about 1/100 to 10/100 are inorganic siliceous pigments, such as silica pigments. These pigments have a refractive index of about 1.4-1.6.

The clear coat/color coat finish can be applied to all types of substrates such as primed or unprimed metal, plastic, rubber, flexible ethylenepropylene copolymer rubbers, flexible polyurethanes, fiberglass reinforced with polyester resins and the like by conventional spraying techniques and preferably the clear coat is applied to the color coat while the color coat is still wet. Other conventional application techniques as mentioned above can also be used. Under some circumstances it may be desirable to apply the clear coat as a powder to a wet color coat and then to form a finish by baking.

Two particularly useful additives for both the color coat and the clear coat are iron pyrophosphate and finely divided silica. Up to about 10% by weight and generally about 0.1-10% by weight based on the weight of the binder, of iron pyrophosphate can be used. Up to about 15% by weight, and generally about 0.5-15% by weight, based on the weight of the binder, of finely divided silica can be used. Iron pyrophosphate and the silica improve the overall durability and performance of the finish
of this invention.

In particular, iron pyrophosphate is
a useful additive which provides a synergistic effect
with the ultraviolet light stabilizer and antioxidant.
Compositions containing the above three constituents
have a surprisingly longer period of outdoor weatherability before failure occurs. The longer period
is more than the cumulative effect that would be
expected of the combination of the three constituents.

The following examples illustrate the
invention. All parts and percentages are on a
weight basis unless otherwise specified.

### EXAMPLE 1

The following constituents are blended
together to form a Paint A (control):

| Portion 1 | Parts By Weight |
|---|---|
| Acrylic resin solution (82.5% solids of a polymer of methyl methacrylate/ lauryl methacrylate/glycidyl methacrylate in a weight ratio of 45/18/37 having a weight average molecular weight of about 3000 in methyl ethyl keton) | 427.44 |
| Blue mill base (247.11 parts of above acrylic resin solution, 6.72 parts of a polymeric dis- persant of a graft copolymer of methyl methacrylate/butyl acrylate in a 18/85 ratio grafted to a biuret of hexamethylene diisocyanate reacted with ammonia, 39.99 parts "Monastral" Blue pigment, 26.19 parts ethylene glycol monobutyl ether acetate) | 123.20 |
| Red mill base (248.07 parts of the above acrylic resin solution, 5.61 parts of the above polymeric dispersant, 39.99 parts of "Monastral" Red pigment, 26.34 parts ethylene glycol mono- butyl ether acetate) | 24.80 |

| | |
|---|---|
| Aluminum flake mill base (60.76 parts of the above acrylic resin solution, 26.49 parts of aluminum flake dispersion 45.3% solids in an organic solvent and above polymeric dispersant, 12.75 ethylene glycol monoethyl ether acetate) | 106.72 |
| Black mill base(237.96 parts of the above polymeric dispersant, 39.99 parts carbon black pigment, 48.03 parts ethylene glycol monobutyl ether acetate) | 53.28 |
| White mill base(111.5 parts of the above acrylic resin solution, 10.50 parts of the above polymeric dispersant, 500.02 parts titanium dioxide pigment, 127.98 parts of ethylene glycol monobutyl ether acetate) | 2.40 |
| Hexamethoxy methyl melamine | 87.20 |
| Ethylene glycol monobutyl ether acetate | 195.20 |

Portion 2

| | |
|---|---|
| Ester diol/TMA reaction product (2 moles of trimellitic anhydride reacted with 1 mole of a diol of the formula   HO $CH_2$ $C(CH_3)_2OCO$- $C(CH_3)_2CH_2OH$) | 306.80 |
| Methanol | 207.76 |
| Total | 1534.8 |

Portion 1 is charged into a mixing vessel and mixed and then Portion 2 is added and thoroughly mixed to form Paint A.

Paint B is prepared by blending together the following constituents:

| | Parts By Weight |
|---|---|
| Paint A(prepared above) | 165.88 |
| Ultraviolet light stabilizer solution [20% solution of 2(2'-hydroxyphenyl)benzotriazole in methyl ethyl ketone] | 13.50 |

| | |
|---|---|
| Antioxidant solution [20% solution of tetrakismethylene 3(3',5'-dibutyl-4'-hydroxyphenyl)-propionate methane] | 1.50 |
| Methanol | 25.97 |
| Total | 206.85 |

A clear coat is prepared by blending the following consituents:

| | Parts By Weight |
|---|---|
| Acrylic resin solution (described above) | 486.00 |
| Hexamethoxy methyl melamine | 65.40 |
| Ethylene glycol monobutyl ether acetate | 147.30 |
| Silicone resin solution | 0.36 |
| Ester diol/TMA reaction product (described above) | 230.10 |
| Methanol | 162.12 |
| | 1091.28 |

A clear coat C is prepared by blending the following constituents:

| | Parts By Weight |
|---|---|
| Clear coat (prepared above) | 464.58 |
| Ultraviolet light stabilizer solution (prepared above) | 40.50 |
| Antioxidant solution (prepared above) | 4.50 |
| Methanol | 81.06 |
| Total | 590.64 |

The above prepared Paint A is sprayed onto three separate sets of four phosphatized steel panels per set and allowed to air dry for 25 minutes and then baked for 10 minutes at 165°C. to form a coating about 1.1 mils thick. The above clear coat is then applied to each of the above painted panels and air dried for 15 minutes, baked for 20 minutes

19

at 165°C to form a clear coat about 0.8-1.0 mils thick.

The above prepared Paint B is sprayed onto six separate sets of four phosphatized steel panels per set and dried and baked as above. The above clear coat is then applied to three sets and clear coat C is applied to the other three sets and dried and baked as above giving about the same like thickness as above.

One set of each of the above panels is exposed to 6 months weathering in Florida. Another set of the above panels is exposed to accelerated weathering in a weathering device and a third set of the above panels is exposed to a Q.U.V. "Weather-O-Meter".

Both sets of panels that contained ultraviolet light stabilizer and antioxidant in the color coat (Paint B) exhibited substantially less loss of gloss of the finish in comparison to the panels of Paint A under actual and accelerated weathering conditions. The set of panels with Paint B and clear coat C in which both coats contained ultraviolet light stabilizer and antioxidant showed excellent resistance to accelerated and actual weathering.

CLAIMS

1. An improved high solids coating composition comprising at least 50% by weight of a binder of film-forming constituents and up to 50% by weight of a liquid carrier; in which the film-forming constituents consist essentially of

(A) about 50-95% by weight of a glycidyl polymer having a number average molecular weight determined by gel permeation chromatography of about 500-10,000, and consisting essentially of

glycidyl methacrylate, methyl methycrylate, an alkyl methacrylate or an alkyl acrylate each having 2-18 carbon atoms in the alkyl group;

(B) about 5-50% by weight of an alkylated melamine formaldehyde cross-linking agent, the improvements uses therewith comprises:

about 0.1-20% by weight, based on the weight of the binder, of an ultraviolet light stabilizer.

2. The coating composition of claim 1 in which the acrylic polymer has a glass transition temperature of about -20°C to +20°C and contains about 2-10% by weight of a chain transfer agent.

3. The coating composition of claim 2 in which the acrylic polymer consists essentially of

15-50% by weight of glycidyl methacrylate,

10-60% by weight of methyl methacrylate, 15-40% by weight of an alkyl methacrylate or an alkyl acrylate having 2-12 carbon atoms in the alkyl group.

4. The coating composition of claim 2 in which the acrylic polymer consists essentially of

20-30% by weight of styrene,

10-30% by weight of methyl methacrylate,

15-30% by weight of lauryl methacrylate,

25-45% by weight of glycidyl methacrylate.

5. The coating composition of any one of claims 1 to 4 containing pigment in addition to the binder in the amount of about 0.1-30% by weight, based on the weight of the binder.

6. A composition according to any one of claims 1 to 5 which contains up to about 10% by weight, based on the weight of the film-forming constituents, of iron pyrophosphate and up to about 15% by weight of finely-divided silica.

7. The coating composition of any one of claims 1 to 6 containing 1-20% by weight, based on the weight of the binder, of an ultraviolet light stabilizer and about 0.1-5% by weight, based on the weight of the binder, of an antioxidant, preferably an alkylene (dialkylhydroxyl-aryl) ester alkane; wherein the weight ratio of ultraviolet light stabilizer to antioxidant is 1:1 to about 50:1.

8. The coating composition of any one of claims 1 to 7 in which the ultraviolet light stabilizer is a benzophenone or a substitued benzotrialzole stabilizer.

9. The coating composition of any one of claims 1 to 8 in which the cross-linking agent is an alkylated melamine formaldehyde resin having 1-4 carbon atoms in the alkyl group, preferably hexamethoxymethyl melamine.

10. The coating composition of claims 3 or 4 containing in addition to the film-forming constituents a carboxyl-terminated reaction product of ester diol and a polycarboxylic acid or polycarboxylic acid anhydride.

11. The coating composition of claim 4 in which the acrylic polymer consists essentially of styrene , methyl methacrylate, lauryl methacrylate, glycidyl methacrylate in a 25/20/37 weight ratio and the cross-linking agent is hexamethoxy methyl melamine.

12. The coating composition of claim 7 in which the ultraviolet light stabilizer is a 2(2'-hydroxyphenyl)benzotriazole or 4-(2,2,6,6,-tetramethyl piperidyl) sebacate or mixtures thereof and the antioxidant is tetrakismethylene-3-(3',5'-dibutyl-4'-hydroxyphenyl)propionate methane.

13. A substrate having a finish of a clear coat top layer in firm adherence to a color coat layer in adherence with the substrate; wherein

the clear coat consists essentially of a transparent film-forming binder of the glycidyl acrylic polymer and the cross-linking agent of claim 1,

the color coat consists essentially of a coalesced layer of the coating composition of claim 1 containing pigments in a pigment-to-binder weight ratio of about 1/100 to 150/100.

14. The substrate of claim 13 in which the color coat is about 0.4-1.5 mils thick and the clear coat is about 0.5-5.0 mils thick, and in which preferably both the color coat and the clear coat each contain an ultraviolet light stabilizer.

15. The substrate of claim 14 in which the clear coat is a dried coalesced layer of the composition of claim 7 and the color coat is a dried coalesced layer of the composition of claim 7 containing pigment in addition to the binder of about 0.1-30% by weight, based on the weight of the binder of the color coat.

## European Patent Office

# EUROPEAN SEARCH REPORT

Application number

EP 80 10 7269

| DOCUMENTS CONSIDERED TO BE RELEVANT | | | CLASSIFICATION OF THE APPLICATION (Int Cl.³) |
|---|---|---|---|
| Category | Citation of document with indication, where appropriate, of relevant passages | Relevant to claim | |
| | FR - A - 1 551 585 (LAVORAZIONE MATERIE PLASTICHE) <br><br> * abstract * <br><br> -- | 1-15 | C 09 D 3/81 <br> 3/80 <br> C 08 L 33/06 <br> 33/14 |
| | US - A - 3 522 207 (D.H.A. HAYER et al.) <br><br> * claims * <br><br> -- | 1-15 | |
| | FR - A - 1 429 032 (AMERICAN CYANAMID) <br><br> * abstract * <br><br> -- | 1-15 | **TECHNICAL FIELDS SEARCHED (Int. Cl.³)** <br><br> C 09 D 3/81 <br> 3/80 <br> C 08 L 33/06 <br> 33/14 <br> 33/00 <br> 33/02 |
| | CHEMICAL ABSTRACTS, vol. 81, no. 24, December 16, 1974, page 133, réf. 154 716x <br> COLUMBUS, Ohio (US) <br> & JP - A - 74 55 737 (DAINIPPON PRINTING CO. LTD.) <br> (May 30, 1974) <br><br> * the whole abstract * <br><br> ------ | 1-15 | 33/04 <br> 33/08 <br> 33/10 <br> 33/12 <br> C 09 D 5/32 <br> C 08 K 5/00 |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 25-02-1981 | FOUQUIER |

EPO Form 1503.1 06.78